# EUROPÄISCHE PATENTSCHRIFT

(11) **EP 4 146 886 B1**
(45) Veröffentlichungstag und Bekanntmachung des Hinweises auf die Patenterteilung: **08.11.2023**
(21) Anmeldenummer: 21714808.9
(22) Anmeldetag: 18.02.2021
(51) Int. Cl.: E05B 77/34, B60J 10/16, E05B 85/02

(54) **GEHÄUSE FÜR KRAFTFAHRZEUG-TECHNISCHE ANWENDUNGEN**
HOUSING FOR MOTOR VEHICLE-RELATED USES
BOÎTIER POUR UTILISATIONS ASSOCIÉES À UN VÉHICULE AUTOMOBILE

(30) Priorität: 06.05.2020 DE 102020112322
(43) Veröffentlichungstag der Anmeldung: 15.03.2023
(73) Patentinhaber: Kiekert Aktiengesellschaft, 42579 Heiligenhaus (DE)
(72) Erfinder: SCHMITZ, Andreas, 42551 Velbert (DE)
(86) Internationale Anmeldenummer: PCT/DE2021/100162
(87) Internationale Veröffentlichungsnummer: WO 2021/223791

(56) Entgegenhaltungen:
- EP-A2- 2 663 424
- DE-A1-102016 102 835
- DE-U1-202011 003 361
- DE-U1-202012 000 931
- JP-A- 2016 033 310

## Beschreibung

Die Erfindung betrifft ein Gehäuse für kraftfahrzeug-technische Anwendungen, mit wenigstens einer Gehäusewand, und mit zumindest einem an die Gehäusewand angeschlossenen ersten Dichtungselement zur Ausrichtung und Führung eines im Vergleich zum ersten Dichtungselement materialverschiedenen zweiten Dichtungselementes.

Gehäuse für kraftfahrzeug-technische Anwendungen sind aufgrund ihres spezifischen Einsatzgebietes verschiedenen Umwelteinflüssen ausgesetzt. Hierzu gehören nicht nur stark schwankende Temperaturen, sondern insbesondere Feuchtigkeit, Staub und sonstige Verschmutzungen. Um eine sichere und zugleich lang anhaltende Funktionsweise zu gewährleisten, kommt folglich den in diesem Zusammenhang eingesetzten Dichtungen eine besondere Bedeutung zu. Darüber hinaus sind in diesem Kontext zwangsläufige Fertigungstoleranzen zu berücksichtigen.

Bei Gehäusen für kraftfahrzeug-technische Anwendungen handelt es sich beispielhaft und nicht einschränkend um einen Schließzylinder für einen Kraftfahrzeug-Türverschluss, wie er beispielsweise in der EP 0 709 532 A1 beschrieben wird. Dabei kann ein Schließzylinderinnenraum durch eine Abdeckkappe verschlossen werden, welche beim Einführen eines Schlüsselschaftes in einen Schlüsselkanal entgegen der Kraft einer Rückstellfeder verschwenkt wird. An der Abdeckkappe ist eine die Schlüsselkanalmündung randseitig verschließende elastische Dichtung befestigt. Diese liegt in geschlossenem Zustand der Abdeckkappe mit einer Dichtlippe an der Innenseite der Abschlusskappe an. Auf diese Weise soll ein Eindringen von Staub, Feuchtigkeit etc. in den Schlüsselkanal sicher verhindert werden.

Darüber hinaus beschäftigt sich die JP 2017-150285 A mit einem Kraftfahrzeug-Türschloss mit verbesserter Wasserdichtigkeit. Dazu ist ein Gehäuse vorgesehen, welches in Richtung auf einen Schlossmechanismus geöffnet ist.

Eine zugehörige Abdeckung dient zum Verschluss dieser Öffnung und ist dazu mit einer Dichtungsanordnung ausgerüstet, welche einen zugehörigen Spalt verschließt. Die Dichtungsanordnung ist zu diesem Zweck relativ komplex aufgebaut und dementsprechend kompliziert anzubringen und zu fertigen.

Im Rahmen der EP 2 663 424 B1 geht es um ein Verfahren zum Aufbringen einer Dichtung auf eine Oberfläche eines Gerätegehäuses für ein Kraftfahrzeug. Dabei wird die Oberfläche des Gehäuses zumindest teilweise durch eine Wärmequelle gereinigt und mikrostrukturiert. Auf die solchermaßen behandelten Bereiche der Oberfläche des Gehäuses wird anschließend eine Dichtungsmasse unmittelbar adhäsiv aufgetragen. Die Mikrostrukturen begünstigen dabei die Haftung der Dichtungsmasse, ohne dass zusätzliche Haftvermittler erforderlich sind. Auf diese Weise lassen sich praktisch beliebige Dichtungsformen einwandfrei und mit geringem Aufwand realisieren.

Beim gattungsbildenden Stand der Technik nach der JP 2016033310 A wird so vorgegangen, dass ein Türschlossgehäuse zum Verhindern des Eindringens von Wasser eine innere Schlossplatte aufweist, die zusätzlich mit einem Verstärkungselement als Dichtungselement ausgerüstet ist. Denn das Verstärkungselement kann insgesamt rinnenförmig gestaltet sein und im Innern der Rinne eine überwiegend bandförmige Dichtung aus beispielsweise Gummimaterial aufnehmen.

Der Stand der Technik hat sich grundsätzlich bewährt, bietet allerdings noch Möglichkeiten zur Verbesserung. So werden in der Regel Türschlösser und zugehörige Gehäuse außen mit der Schaumdichtung ausgerüstet, wie dies in der EP 2 663 424 B1 im Detail beschrieben wird. Mit Hilfe der Schaumdichtung oder allgemein der Dichtung wird eine Abdichtung zwischen dem Schlossgehäuse und einer zugehörigen Kraftfahrzeug-Tür zur Verfügung gestellt, an welcher das Türschloss in der Regel schraubend angebracht wird. Da die Kraftfahrzeug-Tür zumindest im Bereich eines Einlaufmaules des Kraftfahrzeug-Türschlosses eine Öffnung aufweist, kommt der fraglichen Dichtung eine besondere Bedeutung zu, um zu verhindern, dass über diese Öffnung und seitlich zwischen Kraftfahrzeug-Schloss bzw. dessen Gehäuse sowie einem Innentürblech der Kraftfahrzeug-Tür Feuchtigkeit ebenso wie Schmutz in das Innere der Kraftfahrzeug-Tür eindringen können. Das muss schon deshalb verhindert werden, um die Funktionsfähigkeit von im Innern der Kraftfahrzeug-Tür befindlichen Aggregaten wie beispielsweise Fensterhebern oder auch Seitenairbags nach wie vor zu gewährleisten.

Aufgrund von Fertigungstoleranzen bei der Herstellung der Kraftfahrtzeug-Türen und/oder der Gehäuse der Kraftfahrzeug-Schlösser verfügen die bekannten Schaumdichtungen über eine relativ große Dicke, die zwischen 6 mm und 10 mm betragen kann. Eine solche Dicke gleicht zwar die zuvor beschriebenen Toleranzen aus, was für Gummidichtungen, wie sie ebenfalls im Stand der Technik beschrieben werden, nur eingeschränkt der Fall ist.

Da die Anbringung einer solchen Schaumdichtung gemäß der Lehre nach der EP 2 663 424 B1 typischerweise eine Vorbehandlung der mit der Schaumdichtung ausgerüsteten Fläche des Gehäuses erfordert und aufgrund der relativ großen Materialdicke der Schaumdichtung ein signifikanter Materialbedarf beobachtet wird, ist mit nicht unerheblichen Fertigungskosten zu rechnen. Hier setzt die Erfindung ein.

Aus der DE 20 2012 000 931 U1 ist ein Gehäuse mit einer Gehäusewand und einem ersten, an die Gehäusewand angeschlossenen, Dichtungselement, das ein materialverschiedenes zweites Dichtungselement trägt, bekannt.

Der Erfindung liegt das technische Problem zugrunde, ein derartiges Gehäuse für kraftfahrzeug-technische Anwendungen so weiterzuentwickeln, dass insbesondere die Herstellungskosten und gegebenenfalls auch die Montagekosten gegenüber dem bisherigen Stand der Technik reduziert sind.

Zur Lösung dieser technischen Problemstellung schlägt die Erfindung bei einem gattungsgemäßen Gehäuse für kraftfahrzeug-technische Anwendungen vor, dass das erste Dichtungselement als zumindest ein gegenüber der Gehäusewand elastisch nachgebender Arm ausgebildet ist, welcher das zweite Dichtungselement auf seiner gehäuseabgewandten Oberfläche trägt.

Im Rahmen der Erfindung ist also das Dichtungselement bzw. allgemein die Dichtung nach wie vor und unverändert zweiteilig aufgebaut, vergleichbar dem gattungsbildenden Stand der Technik nach der JP 2016033310 A. Im Gegensatz hierzu ist das erste Dichtungselement jedoch als zumindest ein gegenüber der Gehäusewand elastisch nachgebender Arm ausgebildet, stellt folglich eine gleichsam federnde Basis für das zweite Dichtungselement dar. Grundsätzlich können auch mehrere Arme und zugehörige zweite Dichtungselemente realisiert sein. Da das zweite Dichtungselement materialverschieden im Vergleich zum ersten Dichtungselement ausgelegt ist, kann folglich nach wie vor und unverändert das zweite Dichtungselement primär die Dichtungsfunktion übernehmen. Aufgrund der mit Hilfe des elastisch nachgebenden Armes realisierten elastischen Basis für dieses zweite Dichtungselement lassen sich folglich erfindungsgemäß auch relativ große Spalte überbrücken, und zwar ohne dass in diesem Zusammenhang eine besonders dicke Schaumstoffdichtung oder Gummidichtung als zweites Dichtungselement erforderlich ist.

Vielmehr übernimmt das als zumindest ein elastisch nachgebender Arm ausgebildete erste Dichtungselement primär die Funktion der Spaltüberbrückung. Dadurch kann insbesondere die Materialdicke des zweiten Dichtungselementes gegenüber dem Stand der Technik beispielsweise entsprechend der EP 2 663 424 B1 reduziert werden. Mit Blick auf die gattungsbildende JP 2016033310 A ergibt sich als besonderer Vorteil, dass überhaupt große Spaltbreiten konstruktiv einfach beherrscht und durch die erfindungsgemäß realisierte Kombination der beiden Dichtungselemente einwandfrei abgedichtet werden können.

Im Rahmen einer vorteilhaften Ausgestaltung ist der elastisch nachgebende Arm wenigstens zweiteilig mit einem an die Gehäusewand angeschlossenen Armstumpf und einem das zweite Dichtungselement tragenden Armflügel ausgebildet. Das zweite Dichtungselement ist dabei an den Armflügel angeschlossen. Außerdem findet sich das zweite Dichtungselement auf der gehäuseabgewandten Oberfläche des Armflügels, ist folglich nach außen in Bezug auf die Gehäusewand orientiert, sodass hierdurch die gewünschte Dichtungsfunktion problemlos zur Verfügung gestellt wird.

Der Armflügel ist im Allgemeinen größtenteils parallel zur Längserstreckung der Gehäusewand orientiert. Dadurch kann der Armflügel bei der Verbindung der Gehäusewand beispielsweise mit einem Karosseriebestandteil unter Überbrückung eines zugehörigen Spaltes gleichsam elastisch und vertikal im Vergleich zur von der Gehäusewand beschriebenen Oberfläche ausweichen. Da der Armflügel darüber hinaus an seiner gehäuseabgewandten Oberfläche das zweite Dichtungselement trägt, wird im beschriebenen Beispielfall der Spalt zwischen der Gehäusewand und der Karosserie bzw. einem Karosseriebestandteil hierdurch einwandfrei abgedichtet.

Dabei ist die Auslegung meistens noch so getroffen, dass der Armflügel gegenüber der Gehäusewand horizontal beabstandet unter Ausbildung eines Freibereiches ausgelegt ist. Dr Armstumpf sorgt, gegebenenfalls in Verbindung mit dem Armflügel, dafür, dass der Trockenbereich gegenüber einem Nassbereich abgedichtet ist, wie nachfolgend im Ausführungsbeispiel noch näher erläutert wird.

Der Armstumpf und der Armflügel schließen in der Regel einen spitzen Winkel zwischen sich ein. Dadurch kann sich der Armflügel bei der Montage des Gehäuses an oder in der zugehörigen Kraftfahrzeugkarosserie elastisch problemlos in Richtung auf die Gehäusewand verformen. Diese Verformung wird zusätzlich meistens noch dadurch begünstigt, dass der Armstumpf und der Armflügel zusammengenommen im Querschnitt V-förmig ausgebildet sind. Die V-Form drückt dabei zugleich aus, dass sich in Richtung der V-Schenkel der Nassbereich erstreckt, wohingegen die beiden V-Schenkel in Richtung auf ihren Scheitel für die Abdichtung des Trockenbereiches gegenüber dem Nassbereich sorgen.

Aus fertigungstechnischer Sicht empfiehlt es sich, wenn der Arm bzw. das erste Dichtungselement und die Gehäusewand materialeinheitlich ausgebildet sind. Beispielsweise kann der Arm an die Gehäusewand angeformt sein. Als denkbare Materialien für das Gehäuse empfiehlt die Erfindung Metall und insbesondere Kunststoff. Im letztgenannten Fall lässt sich der Arm besonders vorteilhaft an die Gehäusewand anformen, nämlich dann, wenn der Arm und die Gehäusewand insgesamt ein Kunststoffspritzgussteil darstellen. Dadurch wird auch die Fertigung besonders einfach realisiert und ist mit Kostenvorteilen verbunden.

Das zweite Dichtungselement ist in der Regel als Elastomer bzw. elastomerer Kunststoff oder auch als Schaumdichtung ausgebildet. Grundsätzlich sind auch Kombinationen denkbar. Der fragliche elastomere Kunststoff bzw. die Schaumdichtung als zweites Dichtungselement kann dabei ganz generell an den elastisch nachgebenden Arm bzw. das erste Dichtungselement angeformt werden, und zwar im Sinne eines Coextrusionsprozesses.

Im Allgemeinen wird jedoch so vorgegangen, dass das zweite Dichtungselement bzw. die Elastomer- und/oder Schaumdichtung getrennt von dem Gehäuse inkl. erstem Dichtungselement bzw. angeformtem elastisch nachgebenden Arm hergestellt wird. An dieser Stelle empfiehlt es sich, wenn die fragliche Elastomer- und/oder Schaumdichtung an den Arm bzw. dessen Armflügel angeschlossen wird, was in der Regel adhäsiv vorgenommen wird. D. h., die Elastomer- und/oder Schaumdichtung wird regelmäßig an den Armflügel bzw. allgemein das erste Dichtungselement angeklebt. Selbstverständlich kann die Schaumdichtung auf das erste Dichtungselement bzw. den Armflügel auch so aufgebracht werden, wie dies in der EP 2 663 424 B1 im Detail beschrieben wird. D. h., in diesem Fall wird der Armflügel auf seiner gehäuseabgewandten Oberfläche mit Hilfe einer Wärmequelle gereinigt und mikrostrukturiert. Anschließend wird auf die solchermaßen behandelten Bereiche der Oberfläche die Dichtungsmasse adhäsiv aufgetragen.

Bei der Dichtungsmasse kann es sich um den zuvor bereits angesprochenen elastomeren Kunststoff bzw. Elastomer oder auch einen Schaumkunststoff ebenso wie Kombinationen handeln. Generell sind aber auch andere Verbindungstechniken in dem Zusammenhang möglich, beispielsweise dergestalt, dass die beiden Kunststoffe von einerseits dem zweiten Dichtungselement und andererseits dem ersten Dichtungselement miteinander verschweißt werden. Das kann durch Wärmeeinwirkung (beispielsweise über einen Laser erzeugt) oder per Ultraschall erfolgen.

Im Ergebnis wird ein Gehäuse für kraftfahrzeug-technische Anwendungen zur Verfügung gestellt, welches sich insbesondere an oder in einer zugehörigen Kraftfahrzeugkarosserie problemlos festlegen lässt. Zur Erzielung der gewünschten Dichtungswirkung lassen sich auch große Spaltbreiten aufgrund von Fertigungstoleranzen überbrücken. Das alles gelingt unter Berücksichtigung reduzierter Fertigungskosten, weil erfindungsgemäß eine signifikante Materialersparnis für das zweite Dichtungselement beobachtet wird. Denn im Gegensatz zum Stand der Technik beispielsweise nach der EP 2 663 424 B1 kann an dieser Stelle mit Materialstärken gearbeitet werden, die für das zweite Dichtungselement bzw. die in der Regel an dieser Stelle eingesetzte Schaumstoffdichtung von ehemals 6 mm bis 10 mm auf beispielsweise 2 mm oder noch weniger reduziert wird. Dadurch wird der Materialverbrauch für die Schaumstoffabdichtung erheblich verringert. Gleiches gilt natürlich auch für den Fall, dass anstelle der Schaumdichtung die alternative Elastomerdichtung zum Einsatz kommt. Hierin sind die wesentlichen Vorteile zu sehen.

Im Folgenden wird die Erfindung anhand einer lediglich ein Ausführungsbeispiel darstellenden Zeichnung näher erläutert; es zeigen:
Fig. 1 ein erfindungsgemäßes Gehäuse für kraftfahrzeug-technische Anwendungen in Gestalt eines Kraftfahrzeug-Schlossgehäuses sowie eines Steckergehäuses,
Fig. 2 den Gegenstand nach der Fig. 1 schematisch im Querschnitt in einer ersten Variante und
Fig. 3 den Gegenstand nach Fig. 2 in einer anderen abgewandelten Variante.

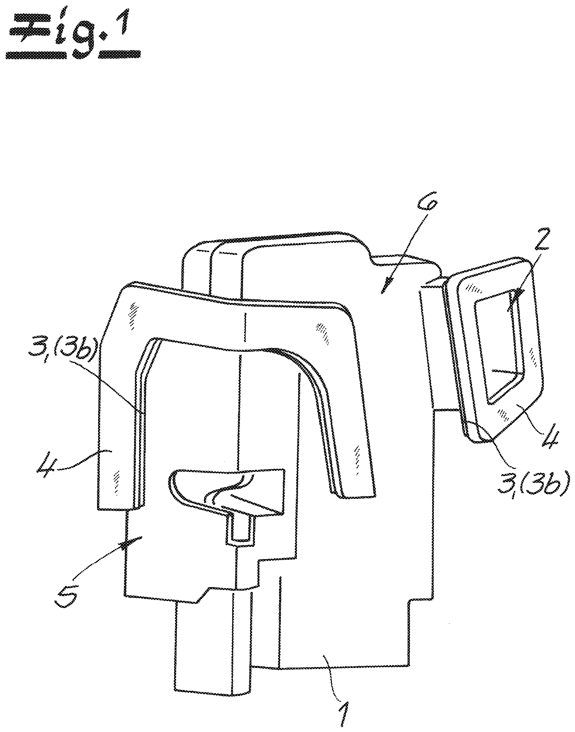

In den Figuren ist ein Gehäuse für kraftfahrzeug-technische Anwendungen dargestellt. Tatsächlich handelt es sich bei dem fraglichen Gehäuse einerseits um ein Schlossgehäuse 1 und andererseits ein Steckergehäuse 2. Grundsätzlich können an dieser Stelle aber auch ganz andere und abweichende Gehäuseformen realisiert werden. Anhand der Fig. 1 erkennt man, dass das dortige Schlossgehäuse 1 mit einer Dichtung ausgerüstet ist, welche im Wesentlichen zweiteilig mit einem ersten Dichtungselement 3 und einem zweiten Dichtungselement 4 ausgebildet ist. Mit Hilfe der solchermaßen am Schlossgehäuse 1 realisierten Dichtung kann das Schlossgehäuse 1 im Innern einer nicht dargestellten Kraftfahrzeug-Tür festgelegt werden. Dabei sorgt die Dichtung ganz generell dafür, dass ein Trockenbereich 5 von einem Nassbereich 6 separiert wird.

Im Detail ist das erste Dichtungselement 3 an eine Gehäusewand 1a als Bestandteil des Gehäuses bzw. Schlossgehäuses 1 angeschlossen. Generell kann das erste Dichtungselement 3 auch an eine Gehäusewand 2a des Steckergehäuses 2 angeschlossen werden. Außerdem sorgt das erste Dichtungselement 3 für eine Ausrichtung und Führung des zweiten Dichtungselementes 4. Das zweite Dichtungselement 4 ist im Vergleich zum ersten Dichtungselement 3 materialverschieden ausgebildet.

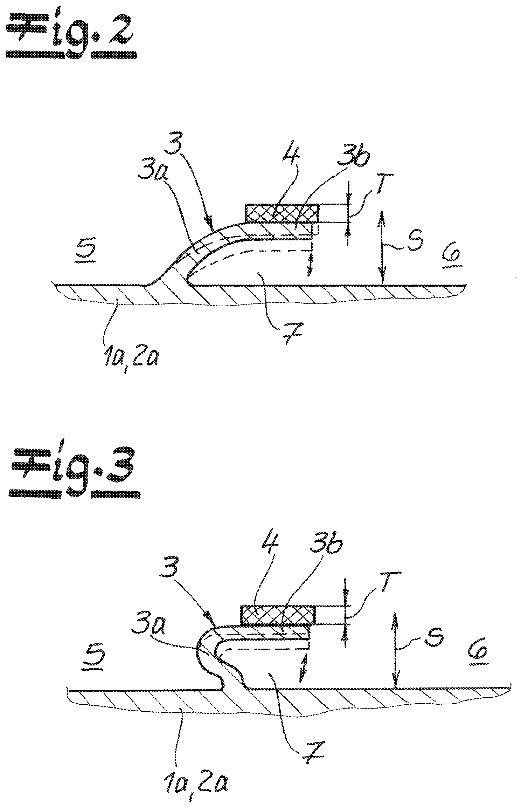

Tatsächlich ist das erste Dichtungselement 3 nach dem Ausführungsbeispiel und ausweislich der Fig. 2 und 3 an die Gehäusewand 1a bzw. 2a angeformt. D. h., das erste Dichtungselement 3 und die Gehäusewand 1a bzw. 2a sind materialeinheitlich ausgebildet, bestehen nach dem Ausführungsbeispiel aus Kunststoff. Bei dem Kunststoff für die Gehäusewand 1a bzw. das Gehäuse 1 und das erste Dichtungselement 3 handelt es sich typischerweise um einen thermoplastischen Kunststoff, beispielsweise POM (Polyoxymethylen). Gleiches gilt für das Steckergehäuse 2. Demgegenüber ist das zweite Dichtungselement 4 materialverschieden ausgelegt. Hierbei handelt es sich typischerweise um einen elastomeren Kunststoff und/oder einen Schaumkunststoff, beispielsweise einen solchen auf PUR (Polyurethan)-Basis.

In konstruktiver Hinsicht erkennt man insbesondere bei einer vergleichenden Betrachtung der Schnittdarstellungen nach den Fig. 2 und 3, dass das erste Dichtungselement 3 als zumindest ein gegenüber der Gehäusewand 1a, 2a elastisch nachgebender Arm 3 ausgebildet ist. Der elastisch nachgebende Arm 3 trägt dabei das zweite Dichtungselement 4 auf seiner gehäuseabgewandten Oberfläche. Tatsächlich ist das zweite Dichtungselement 4 auf diese gehäuseabgewandte Oberfläche beispielsweise aufgeklebt, und zwar so, wie dies einleitend bereits beschrieben wurde. Dazu mag zunächst die gehäuseabgewandte Oberfläche des ersten Dichtungselementes 3 mit einer flächenmäßig eingegrenzten Wärmequelle gereinigt und mikrostrukturiert werden, wobei auf die solchermaßen behandelten Bereiche der Oberfläche anschließend die das zweite Dichtungselement 4 definierende Dichtungsmasse adhäsiv aufgetragen wird.

Der elastisch nachgebende Arm bzw. das erste Dichtungselement 3 ist nach dem Ausführungsbeispiel insgesamt zweiteilig ausgelegt. Tatsächlich verfügt der elastisch nachgebende Arm bzw. das erste Dichtungselement 3 über einen an die Gehäusewand 1a, 2a angeschlossenen Armstumpf 3a und einen an den Armstumpf 3a angeschlossenen sowie das zweite Dichtungselement 4 tragenden Armflügel 3b. Der Armflügel 3b ist dabei größtenteils parallel zur Längserstreckung der Gehäusewand 1a orientiert.

Außerdem erkennt man anhand der Schnittdarstellungen in den Fig. 2 und 3, dass der Armstumpf 3a und der Armflügel 3b einen spitzen Winkel zwischen sich einschließen. Auf diese Weise sind der Armstumpf 3a und der Armflügel 3b zusammengenommen und im Querschnitt V-förmig ausgebildet. Als Folge hiervon ist der Armflügel 3b gegenüber der Gehäusewand 1a, 2a horizontal beabstandet und wird an dieser Stelle ein Freibereich 7 definiert.

In diesen Freibereich 7 kann der Armflügel 3b bei der Montage des Schlossgehäuses 1 an der nicht dargestellten Kraftfahrzeug-Tür ausweichen, wie entsprechende Pfeile in der Fig. 2 und die hierdurch erreichte Montagestellung in gestrichelter Ausführungsform deutlich macht. Bei dieser Montage wird darüber hinaus so vorgegangen, dass der im Querschnitt und zusammengenommen V-förmig ausgebildete Armstumpf 3a und der Armflügel 3b in Richtung auf den Nassbereich 6 geöffnet sind. D. h., ein Scheitel der V-Form weist in Richtung auf den Trockenbereich 5, sodass die zusammengenommene Wirkung des ersten Dichtungselementes 3 in Verbindung mit dem zweiten Dichtungselement 4 insgesamt dafür sorgt, dass ausgehend vom Nassbereich 6 weder Staub noch Feuchtigkeit in den Trockenbereich 5 gelangen können.

Eine vergleichbare Auslegung, wie sie zuvor beschrieben wurde, kann auch bei dem Steckergehäuse 2 realisiert sein. In diesem Fall ist anstelle der Gehäusewand 1a eine entsprechende Gehäusewand 2a des Steckergehäuses 2 entsprechend ausgelegt, wie insbesondere in den Schnittdarstellungen nach den Fig. 2 und 3 zum Ausdruck kommt. In beiden Fällen wird mit Hilfe des ersten Dichtungselementes 3 in Verbindung mit dem zweiten Dichtungselement 4 insgesamt ein Spalt S überbrückt und geschlossen. Dabei verfügt das zweite Dichtungselement 4 über eine Materialstärke T, die die Breite des Spaltes S deutlich unterschreitet, bzw. nur maximal 30 % oder 20 % der Breite des Spaltes S beträgt.

**Bezugszeichenliste**

| | |
|---|---|
| 1, 2 | Gehäuse 1 Schlossgehäuse 2 Steckergehäuse |
| 1a, 2a | Gehäusewand |
| 3 | nachgebender Arm / erstes Dichtungselement |
| 3a | Armstumpf 3b Armflügel |
| 4 | Dichtungselement / zweites Dichtungselement |
| 5 | Trockenbereich |
| 6 | Nassbereich |
| 7 | Freibereich |
| S | Spalte |
| T | Materialstärke |

## Patentansprüche

1. Gehäuse für kraftfahrzeug-technische Anwendungen, mit wenigstens einer Gehäusewand (1a, 2a), und mit zumindest einem an die Gehäusewand (1a, 2a) angeschlossenen ersten Dichtungselement (3) zur Ausrichtung und Führung eines im Vergleich zum ersten Dichtungselement (3) materialverschiedenen zweiten Dichtungselementes (4),
**dadurch gekennzeichnet, dass**
das erste Dichtungselement (3) als zumindest ein gegenüber der Gehäusewand (1a, 2a) elastisch nachgebender Arm (3) ausgebildet ist, welcher das zweite Dichtungselement (4) auf seiner gehäuseabgewandten Oberfläche trägt.

2. Gehäuse nach Anspruch 1, **dadurch gekennzeichnet, dass** der elastisch nachgebende Arm (3) wenigstens zweiteilig mit einem an die Gehäusewand (1a, 2a) angeschlossenen Armstumpf (3a) und einem das zweite Dichtungselement (4) tragenden Armflügel (3b) ausgebildet ist.

3. Gehäuse nach Anspruch 1 oder 2, **dadurch gekennzeichnet, dass** der Armflügel (3b) größtenteils parallel zur Längserstreckung der Gehäusewand (1a, 2a) orientiert ist.

4. Gehäuse nach einem der Ansprüche 1 bis 3, **dadurch gekennzeichnet, dass** der Armflügel (3b) gegenüber der Gehäusewand (1a, 2a) horizontal beabstandet unter Ausbildung eines Freibereiches (7) ausgelegt ist.

5. Gehäuse nach einem der Ansprüche 1 bis 4, **dadurch gekennzeichnet, dass** der Armstumpf (3a) und der Armflügel (3b) einen spitzen Winkel zwischen sich einschließen.

6. Gehäuse nach einem der Ansprüche 1 bis 5, **dadurch gekennzeichnet, dass** der Armstumpf (3a) und der Armflügel (3b) zusammengenommen im Querschnitt V-förmig ausgebildet sind.

7. Gehäuse nach einem der Ansprüche 1 bis 6, **dadurch gekennzeichnet, dass** der Arm (3) und die Gehäusewand (1a, 2a) materialeinheitlich ausgebildet sind.

8. Gehäuse nach Anspruch 7, **dadurch gekennzeichnet, dass** der Arm (3) an die Gehäusewand (1a, 2a) angeformt ist.

9. Gehäuse nach Anspruch 8, **dadurch gekennzeichnet, dass** der Arm (3) und die Gehäusewand (1a, 2a) aus Kunststoff hergestellt sind, beispielsweise als Kunststoffspritzgussteil ausgebildet sind.

10. Gehäuse nach einem der Ansprüche 1 bis 9, **dadurch gekennzeichnet, dass** das zweite Dichtungselement (4) als Elastomer- und/oder Schaumdichtung ausgebildet ist.

## Claims

1. Housing for motor vehicle applications, comprising at least one housing wall (1a, 2a), and comprising at least one first sealing element (3) connected to the housing wall (1a, 2a) for aligning and guiding a second sealing element (4) made of a different material compared with the first sealing element (3),
**characterized in that**
the first sealing element (3) is in the form of at least one arm (3), which is resiliently yielding with respect to the housing wall (1a, 2a) and supports the second sealing element (4) on its surface facing away from the housing.

2. Housing according to claim 1, **characterized in that** the resiliently yielding arm (3) is formed in at least two parts having an arm stub (3a) connected to the housing wall (1a, 2a) and an arm wing (3b) supporting the second sealing element (4).

3. Housing according to claim 1 or 2, **characterized in that** the arm wing (3b) is largely oriented in parallel with the longitudinal extension of the housing wall (1a, 2a).

4. Housing according to any of claims 1 to 3, **characterized in that** the arm wing (3b) is designed to be spaced apart horizontally from the housing wall (1a, 2a) in order to form a free region (7).

5. Housing according to any of claims 1 to 4, **characterized in that** the arm stub (3a) and the arm wing (3b) enclose an acute angle between them.

6. Housing according to any of claims 1 to 5, **characterized in that** the arm stub (3a) and the arm wing (3b), when considered together, are designed to be V-shaped in cross section.

7. Housing according to any of claims 1 to 6, **characterized in that** the arm (3) and the housing wall (1a, 2a) are made of the same material.

8. Housing according to claim 7, **characterized in that** the arm (3) is integrally formed on the housing wall (1a, 2a).

9. Housing according to claim 8, **characterized in that** the arm (3) and the housing wall (1a, 2a) are made of plastics material, for example in the form of an injection-molded plastics part.

10. Housing according to any of claims 1 to 9, **characterized in that** the second sealing element (4) is in the form of an elastomer seal and/or foam seal.

## Revendications

1. Boîtier pour utilisations techniques associées à un véhicule automobile, comportant au moins une paroi de boîtier (1a, 2a) et comportant au moins un premier élément d'étanchéité (3) relié à la paroi de boîtier (1a, 2a) pour l'orientation et le guidage d'un second élément d'étanchéité (4) de matériau différent par comparaison avec le premier élément d'étanchéité (3),
**caractérisé en ce que**
le premier élément d'étanchéité (3) est formé comme au moins un bras (3) élastiquement flexible par rapport à la paroi de boîtier (1a, 2a), qui porte le second élément d'étanchéité (4) sur sa surface loin du boîtier.

2. Boîtier selon la revendication 1, **caractérisé en ce que** le bras (3) élastiquement flexible est formé au moins en deux pièces comportant un bras tronqué (3a) relié à la paroi de boîtier (1a, 2a) et une ailette de bras (3b) portant le second élément d'étanchéité (4).

3. Boîtier selon la revendication 1 ou 2, **caractérisé en ce que** l'ailette de bras (3b) est orientée en grande partie parallèlement à l'extension longitudinale de la paroi de boîtier (1a, 2a).

4. Boîtier selon l'une des revendications 1 à 3, **caractérisé en ce que** l'ailette de bras (3b) est montée à distance horizontale par rapport à la paroi de boîtier (1a, 2a) en formant une zone libre (7).

5. Boîtier selon l'une des revendications 1 à 4, **caractérisé en ce que** le bras tronqué (3a) et l'ailette de bras (3b) forment entre eux un angle aigu.

6. Boîtier selon l'une des revendications 1 à 5, **caractérisé en ce que** le bras tronqué (3a) et l'ailette de bras (3b), pris ensemble, sont formés avec une section transversale en forme de V.

7. Boîtier selon l'une des revendications 1 à 6, **caractérisé en ce que** le bras (3) et la paroi de boîtier (1a, 2a) sont formés d'un seul matériau.

8. Boîtier selon la revendication 7, **caractérisé en ce que** le bras (3) et la paroi de boîtier (1a, 2a) sont moulés.

9. Boîtier selon la revendication 8, **caractérisé en ce que** le bras (3) et la paroi de boîtier (1a, 2a) sont fabriqués en plastique, par exemple sont formés sous forme de pièce moulée par injection de plastique.

10. Boîtier selon l'une des revendications 1 à 9, **caractérisé en ce que** le second élément d'étanchéité (4) est formé en tant que joint en élastomère et/ou en mousse.
